# EUROPEAN PATENT APPLICATION

(11) **EP 1 504 889 A2**
(43) Date of publication of application: **09.02.2005**
(21) Application number: 04254453.6
(22) Date of filing: 26.07.2004
(51) Int. Cl.: B32B 3/12

(54) **Sandwich panel with interior barrier**

(30) Priority: 28.07.2003 US 629078
(71) Applicant: HEXCEL CORPORATION, Dublin, California 94568 (US)
(72) Inventor: Smith, Lance D., Dublin California 94568 (US); Walsh, Paul, Dublin California 94569 (US)
(74) Representative: Wilson Gunn M'Caw

(57) **Abstract**

Composite sandwich panels (10) that include a core (12) having a permeable body that is sandwiched between two skins (18, 20). An internal barrier (22) is located between the skins (18, 20) and the core (12) to provide an impermeable chamber (28) surrounding the permeable core (12). The chamber (28) is pressurized during formation of the panel (10) to provide an interior counter pressure against the mold/press used to form the panel (10). The counter pressure applied by the chamber (28) reduces the amount of voids in the skins (18, 20) and improves the surface finish of the skins (18, 20). In addition, the impermeable material remains within the finished panel to provide an internal barrier surrounding the core (12).

## Description

### BACKGROUND OF THE INVENTION

### 1. Field of the Invention

The present invention relates generally to structures that include a core sandwiched between two skins to provide a lightweight and structurally strong panel. Such structures are commonly referred to as "sandwich panels". More particularly, the present invention is directed to improving the quality of the skins and the overall sandwich panel by internally pressurizing the panel during the molding process.

### 2. Description of Related Art

Sandwich panels have been used widely in all types of situations where light weight and high structural strength are required. Sandwich panels have been used extensively in the aerospace industry. For example, sandwich panels are used in aircraft structural parts and control surfaces as well as floorboards and other interior panels. Sandwich panels are also popular in the automotive industry where their ability to absorb relatively large amounts of impact energy is an important consideration. Sandwich panels are also used in a variety of civil engineering and building construction applications where preformed structural panels are assembled together to form various exterior and interior structural elements of a building.

Sandwich panels typically include two sheets of material referred to as "skins" that are bonded to opposite sides of a core to form a sandwich. The core is usually made from materials that are more lightweight than the skins. Honeycomb and foam are particularly popular core materials. Honeycomb cores are made from a wide variety of materials including metals, plastics, treated paper and resin impregnated fibers. The types of foam that are used as sandwich panel cores also vary widely. A wide range of foam densities have been used depending upon the particular application for the panel. Relatively dense foams have been used where weight is not a particular concern and high structural strength is required. Less dense foams are used in situations where light weight and energy absorption are important. A multitude of different foam materials have been used in sandwich panels. Fire and heat resistant foams are typically used in aerospace and automotive applications.

The skins used in sandwich panels have also been made from a wide variety of materials depending upon the particular use intended for the panel. Metal, plastic and resin impregnated fibers are popular skin materials. Resin impregnated fibers are commonly referred to as composite materials or simply "composites". A composite is made by impregnating one or more layers of fibers with an uncured resin. After curing, the resulting composite includes fibers embedded in a cured resin matrix. The combination of fibers and resin matrix produces sheets or skins that are particularly strong and lightweight. The fibers used in composites vary widely and include glass, graphite, boron and ceramic fibers. Fibers come in an extremely wide variety of sizes, shapes and configurations. Woven fabric, unidirectional fibers, randomly oriented fiber matting and chopped fibers are just a few examples. Both thermosetting and thermoplastic resins have been used in composites. Although numerous types of matrix resins are available, epoxy resins have been very popular.

A common process for fabricating composite material skins involves first preparing a number of separate fiber layers that are each impregnated with an appropriate amount of a liquid resin such as a thermosetting or thermoplastic resin. The resin impregnated fiber layers are referred to as "prepreg". The desired number of prepreg layers are laminated together to form an uncured skin that may be cured prior to or during formation of the sandwich panel. Using prepregs to form skins for sandwich panels is desirable because it allows one to carefully control the amount of resin that is present in the skins.

An important aspect of any sandwich panel is the bonding of the skins to the core. It is important that the skins and core materials be chosen so that a suitably strong bond between the skins and core can be obtained. Poor bonding of the skins to the core causes a substantial reduction in the overall strength of the sandwich panel. Many different bonding systems have been used depending upon the particular combination of skins and core. Generally, the skins are pressed against the core using a mold. In many situations, an adhesive is placed between the skins and the core to provide adequate bonding during application of pressure by the mold. A separate adhesive is not always used because some skin materials are inherently adhesive. For example, many of the resins used in prepreg skins are very good adhesives. As a result, many prepreg skins are bonded to the core without an additional adhesive. The prepreg is cured after the sandwich panel has been placed in the mold and generally at the same time pressure is applied by the mold.

There is a tendency for certain types of skins and adhesives to develop voids or other imperfections during final processing of the sandwich panels in the mold. This is especially true for prepreg skins that are cured during the molding step. Increasing the mold pressure generally has little effect and may sometimes make the problem worse. Accordingly, there is a need to provide new and useful molding techniques that may be used for making sandwich panels where the formation of voids and imperfections in the skins is eliminated or at least reduced.

### SUMMARY OF THE INVENTION

In accordance with the present invention methods are provided for producing sandwich panels in which the amount of voids and imperfections in the skins and/or skin adhesive is substantially reduced. The invention is based in part on the discovery that the interior of the sandwich panel can be pressurized during molding to provide an outward pressure against the interior surface of the adhesive and/or skins. This pressure functions as a counter pressure or force against the pressure or force exerted by the mold against the exterior surface of the skins. It was found that the use of such counter pressure is useful in reducing the amount of voids and other imperfections in the adhesive and/or skins.

The present invention covers sandwich panels that include a permeable core having a first panel surface, a second panel surface and an edge extending around the perimeter of the panel surfaces. First and second skins are attached to the first and second panel surfaces, respectively, so that the skins substantially cover the panel surfaces. As a feature of the invention, a barrier is located between the first skin and the first panel surface and between the second skin and the second panel surface. The barrier is made from an impermeable material and extends around the core to provide an impermeable chamber in which the core is located. The impermeable chamber is pressurized during molding of the panel to provide a counter pressure against the mold pressure (commonly referred to as the "clamp tonnage"). The impermeable material is left in place after formation to provide an integral permanent barrier surrounding the core.

The invention also covers the methods for forming sandwich panels that have an interior barrier. The methods involve providing a core that is a permeable body. A permeable body is necessary in order to provide for uniform pressurization of the impermeable chamber. The permeable body includes a first panel surface with a first perimeter, a second panel surface with a second perimeter and an edge extending between the first and second perimeters of the first and second panel surfaces. The core is surrounded with an impermeable material to form an impermeable chamber having an interior in which the core is located. At least one skin is placed next to the first or second panel surface so that the impermeable material is sandwiched between the skin and the panel surface. Once in place, the skin has an interior surface adjacent to the impermeable material and an exterior surface. The skin is then bonded to the core (with an adhesive, if necessary) by applying heat and a given amount of molding pressure (clamp tonnage) to the exterior surface of the skin. As a feature of the invention, pressure is applied to the interior of the impermeable chamber during the bonding step to form a counter pressurized chamber that applies counter pressure against the interior surface of the skin.

The present invention is useful for making a wide variety of sandwich panels that may be used in numerous different applications. The invention is particularly well suited for use in making sandwich panels where a honeycomb or foam core is bonded to thermosetting or thermoplastic prepreg composite skins and cured using heat and pressure in a mold to form the final sandwich panel. The use of an interior barrier and core counter pressure not only reduces the amount of voids and imperfections in the final composite skin, but also provides a permanent interior barrier that remains as an integral part of the panel. A permanent internal barrier is useful in situations where the final skins may be porous or susceptible to the development of cracks.

The above discussed and many other features and attendant advantages of the present invention will become better understood by reference to the detailed description when taken in conjunction with the accompanying drawings.

### BRIEF DESCRIPTION OF THE DRAWINGS

FIG. 1 is a partial schematic side view of a first exemplary sandwich panel in accordance with the present invention wherein a honeycomb core is bonded to an internal barrier with an adhesive and self-adhesive composite skins are bonded to the exterior surface of the internal barrier.
FIG. 2 is a partial schematic side view of a second exemplary sandwich panel in accordance with the present invention wherein a foam core is bonded to an internal barrier with an adhesive and the skins are bonded to the internal barrier with an adhesive.
FIG. 3 is a partial schematic side view of an exemplary sandwich panel during fabrication where the skin, internal barrier and core are thermally fusible.
FIG. 4 is a partial schematic side view of a sandwich panel of the type shown in FIG. 1 during fabrication of the panel.
FIG. 5 is a partial schematic side view of a sandwich panel of the type shown in FIG. 2 during fabrication of the panel.
FIG. 6 is a partial schematic side view of a sandwich panel of the type shown in FIG. 2 during fabrication of the panel wherein the panel additionally includes a surfacing material.

### DETAILED DESCRIPTION OF THE INVENTION

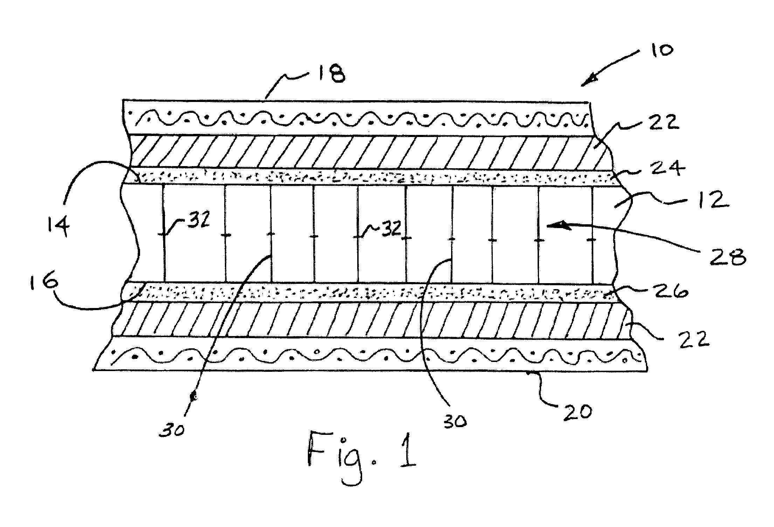

The present invention may be used in making any of the many different types of sandwich panels that are currently in use. The invention is particularly well suited for use in situations where the skins are made from composite materials and the core is honeycomb, foam or alternative cores, such as "egg-crate" shaped cores. A preferred exemplary sandwich panel in accordance with the present invention is shown generally at 10 in FIG. 1. The sandwich panel 10 includes a core 12 that has a first panel surface 14 and a second panel surface 16. The edge of the core extends between the perimeters of the panel surfaces 14 and 16 and will vary widely depending upon the size and shape of each panel. A first skin 18 and a second skin 20 are attached to the first and second panel surfaces 14 and 16, respectively. The skins 18 and 20 substantially cover the surfaces of the panel. In many situations, the skins may extend out past the edges of the core. As a feature of the invention, a barrier 22 is located between the first skin 18 and the first panel surface 14 and between the second skin 20 and the second panel surface 16. The barrier 22 is adhesively bonded to the first panel surface 14 by an adhesive layer 24. The barrier 22 is also adhesively bonded to the second panel surface by an adhesive layer 26. The barrier is made from an impermeable material and extends around the entire core 12 to provide an impermeable chamber 28 in which the core 12 is located. Only a portion of chamber 28 is shown in FIG. 1 for simplicity. In practice, the barrier 22 is extended out past the edge of the core and closed together to form a bag surrounding the core 12.

The core 12 shown in FIG. 1 is preferably made from honeycomb. The particular size and shape of the honeycomb may vary widely. An important consideration is that the various cells of the honeycomb be vented so that a uniform counter pressure may be applied within chamber 28. If the walls 30 of the honeycomb are impermeable, then they must be perforated or otherwise vented as shown at 32. The terms "permeable" and "impermeable" are used herein to describe the permeability of the core, skin and barrier materials with respect to either gases and/or liquids. When the chamber 28 is to be pressurized using a gas, then the honeycomb walls 30 must be permeable to the gas or vapor and the barrier 22 must be impermeable to the gas or vapor. However, when a liquid is used to pressurize chamber 28, then the honeycomb walls 30 must only be permeable to the liquid. Likewise, the barrier 22 must only be impermeable to the liquid. The barrier 22 may be permeable to gas. Accordingly, the meaning of permeable and impermeable will vary depend upon the pressurization media used as will be discussed in detail below.

The honeycomb 12 may be made from any of the materials used to make honeycomb for use in sandwich panels including: metals, such as aluminum; plastics, such as polyamide; composites, such as cellulose, graphite or glass fibers embedded in a resin matrix; non-woven spun bonded polypropylene, wet-calendared polyester; spun bonded nylon and spun bonded polyethylene terephathalate (PET). The size and shape of the honeycomb cells as well as the wall thickness can vary provided that the honeycomb is suitable for use in forming sandwich panels. Some honeycomb raw materials such as cellulose paper or spun bonded mats are naturally permeable. If the material used to make the honeycomb is not permeable to liquids (when a liquid is used to pressurize chamber 28) or gases (when a gas is used to pressurize chamber 28), then the walls of each honeycomb cell must be perforated to allow passage of liquid or gas between the cells. The degree of perforation required will vary depending upon a number or processing parameters including size of the honeycomb, the type of gas or liquid being used, the molding temperature, the desired pressurization level for chamber 28 and the processing time. For each individual situation, the amount of wall perforation can be easily determined experimentally. The main consideration is that the perforations be sufficient to allow a suitable transfer of gas or liquid throughout the honeycomb to provide uniform pressurization of the chamber 28. The location of the perforations may also be varied. The perforations or vent holes 32 are shown centrally located along the honeycomb walls 32. The perforations could also be located closer to or even at the panel surfaces of the honeycomb. In most situations, the gas or liquid used to pressurize chamber 28 is removed after the molding step. However, there are situations where it may be desirable to leave some or all of the gas or liquid in the honeycomb. In such situations, the size, location and amount of perforations may be reduced.

The skins 18 and 20 may be made from any of the conventional materials used in making sandwich panels. In the embodiment shown in FIG. 1, the skins 18 and 20 are made from a composite material. Exemplary composite materials include graphite, glass, ceramic or metal fibers embedded in a thermoplastic or thermosetting resin. Any of the fiber types and orientations typically used in sandwich panel skins may be used including woven fabric, random fiber mat, unidirectional fibers, chopped fibers and combinations thereof. The resin matrix in which the fibers are embedded may also be any of the resins used in sandwich panels. The present invention is particularly well suited for use with composite skins that use either thermosets, such as epoxy, phenolic or polyester, or thermoplastics, such as polypropylene (PP), polyamide, (nylon) (PA), thermoplastic polyester (PET) as the resin matrix. Such skins are generally drapable as prepregs and will conform to irregular shapes. However, they typically exhibit poor surface finish with relatively high void content, poorly wetted fibers and rough surface characteristics. These types of skins generally remain gas permeable until after they have been cured. Examples of other suitable resin types include thermoset vinylester, bismaleimide (BMI), polyimide (PI), polyurethane (PU), silicone, and thermoplastics such as PET, polycarbonate (PC), acrylic, polyetherimide (PEI), polyamideimide (PAI), and polyethersulfone (PES).

The barrier 22 can be made from a number of materials that remain relatively flexible during the molding process and are impermeable. The barrier material must also be compatible with the skins and any adhesives that are used to bond the barrier to either the skins or the core. The same type of materials that are used in thermoplastic prepreg resins may also be used in the barrier 22. Exemplary barrier materials include flexible plastics, such as polyamide, polypropylene, polyester, PEI and PES. The barrier material must also be stable at the temperatures to which the panel is exposed during the molding process. Some melting of the barrier material is acceptable, especially if the barrier is being bonded thermally to either the skins or the core. However, the barrier must retain sufficient structural integrity during molding to prevent escape of the gas or liquid that is used to pressurize the chamber 28.

The barrier 22 can be adhesively bonded to the core 12 using any adhesive that is compatible with the barrier material and is not adversely affected by the temperatures and pressures utilized during molding of the sandwich panel. Exemplary adhesives include thermosets such as epoxy polyurethane, BMI, polyester as well as thermoplastic such as PP, PET, PA, PE, thermoplastic polyolefin (TPO), vinyl, PU. If desired, the adhesive may be eliminated and the barrier 22 bonded directly to the core 12 provided that the barrier material (or core material) can be made inherently adhesive by heating or other treatment. As shown in Fig. 1, the skins 18 and 20 are bonded directly to the barrier 22. This is accomplished by providing skins, barrier or both that are inherently adhesive or can be made inherently adhesive by heating or other treatment. An adhesive may be used, if necessary, to insure proper bonding of the skins to the barrier. It should be noted that FIG. 1 is schematic in nature and that the depicted thickness of the core 12, adhesive layers 24 and 26, barrier 22 and skins 18 and 20 are not to scale nor are they necessarily representative of the relative thickness of the elements. In general, the core will be much thicker than the skins and the skins will be thicker than the barrier and adhesive layers, if any.

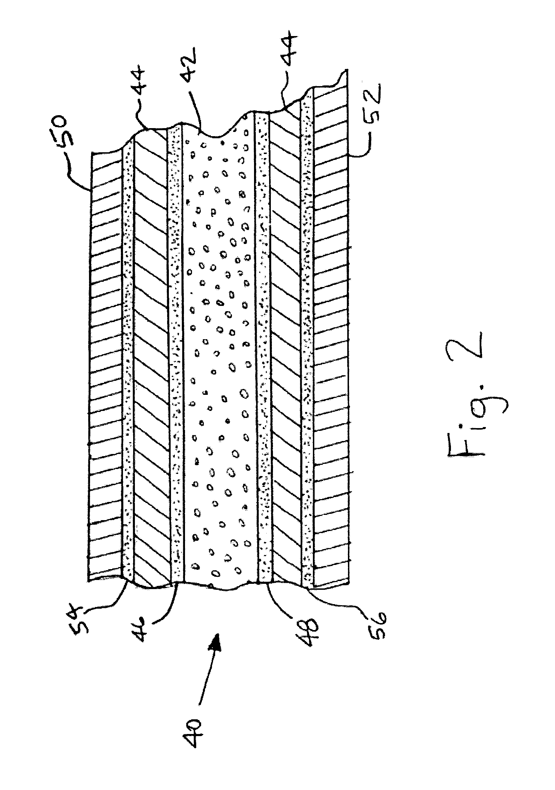

A second exemplary sandwich panel in accordance with the present invention is shown at 40 in FIG. 2. The panel 40 includes a foam core 42 that is adhesively bonded to the interior surface of barrier 44 by adhesive layers 46 and 48. Skins 50 and 52 are adhesively bonded to the exterior surface of barrier 44 by adhesive layers 54 and 56, respectively. The foam core 42 can be made from any of the foams used in sandwich panel construction provided that the foam is sufficiently porous to allow transport of pressurizing gases and/or liquid uniformly against the barrier 44. As was the case with FIG. 1, a side view of only a portion of the overall sandwich panel is shown. As previously mentioned, the barrier 44 extends completely around the core 42 to provide a bag or chamber that can be pressurized. The materials that can be used to form the barrier, adhesives and skins may be the same as those described in connection with the sandwich panel shown in FIG. 1. The principal difference being that the skins are bonded to the barrier using a separate adhesive and the barrier is bonded to the core using a separate adhesive. Accordingly, the sandwich panel 40 does not require the use of skins or barrier material that are inherently adhesive.

The method for making the sandwich panels involves initially surrounding the core with the barrier material to form an impermeable chamber having an interior in which the core is located. Typically, the core is placed in a bag of barrier material that is then sealed around the edges by heat or adhesives. Preferably, the bag is sealed in the mold as a first step in the molding process. Any adhesive that may be required to bond the barrier material to the core is applied to the panel surfaces of the core prior to bagging. The skins are then applied to the exterior surface of the barrier bag so that each of the skins substantially covers their respective panel surfaces on the core. Any adhesive that may be required to bond the skins to the barrier material is applied to either the exterior surface of the barrier material or the interior surface of the skins. The assembly of core, barrier and skins is then placed in a suitable press or mold. As is known it the art, the walls of the press or mold are then forced inward against the assembly to exert a molding pressure (clamp tonnage) on the exterior surface of the skins. If necessary, the assembly is heated during the molding process to provide for curing of resins and thermal bonding.

An important part of the invention involves applying pressure to the interior to the impermeable chamber during the molding/bonding step. The application of an outward counter pressure against the clamp tonnage was found to reduce the number of voids and other imperfections that may develop in the skins and/or adhesives during molding of the sandwich panel. The counter pressure is applied using a gas or liquid that is introduced into the impermeable chamber through appropriate inlets in the mold and chamber. The use of gas as the pressurizing medium is preferred since gases are more easily evacuated from the finished sandwich panel. In addition, gases are less likely to leave a residue. However, there are still many situations where liquids may be used to pressurize the chamber.

The gases and liquids used to pressurize the chamber should not adversely affect the core material, the adhesive or the barrier material. Exemplary gases include carbon dioxide, nitrogen, air and helium. Exemplary liquids include water or glycol. The gas or liquid be relatively non-reactive to reduce the risk of fire or unwanted oxidation of the core material. For instance, when using air to pressurize honeycomb cores made from Nylon (polyamide) at temperatures on the order of 500° F., the surface of the honeycomb turns brown due to oxidation. Accordingly, nitrogen or other inert gas should be used. In some situations, reactions between the pressurizing gas or liquid and the core material may be desirable. For example, a pressurizing liquid may be used that includes one or more chemicals that provide a final surface coating or treatment for the honeycomb or other core material.

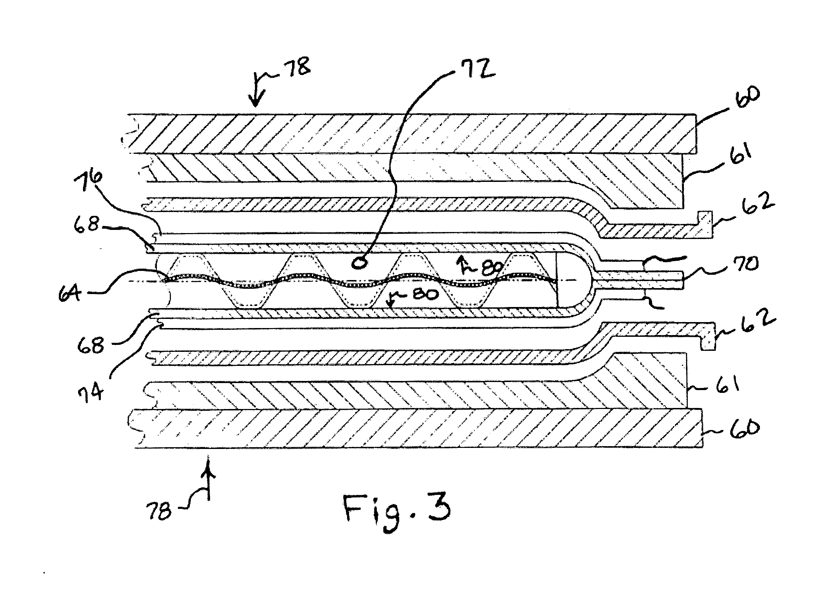

A partial view of an assembly of core, barrier and skins is shown in place within a press 60 in FIG. 3. A backup tool 61 is provided that may be heated or cooled, as necessary, without heating or cooling the press 60. In addition, a shell tool 62 is provided as an aid for handling the panel materials before and after they are placed into the press 60. The core 64 is in the form of an egg crate structure that is made from a plastic material, such as polyamide 6/6. There is no need to perforate the egg crate to provide core permeability because the shape of the egg crate inherently allows a uniform counter pressure to be applied outwardly against the press 60. A barrier 68 completely surrounds the core 64. The barrier 68 is also made from a plastic material, such a polyamide 6/6 that melts at a temperature greater than the molding process temperature. The barrier 68 extends out past the edge of the core 64 and is compression sealed, heat-sealed or otherwise sealed as shown at 70 to provide a closed bag or chamber in which the core 64 is located. An inlet 72 is located through the press 60 and barrier 68 to provide for the introduction of gas or liquid to pressurize the chamber defined by the impermeable barrier 68. Skins 74 and 76 are located between the barrier 68 and the shell tool 62. The skins are made from a composite material, such as Nylon 6/Eglass. The panel construction composed of the materials just described is easily recyclable since all the plastic components are of the same family.

During the molding process, the press 60 is forced together as represented by arrows 78 to provide an inward molding pressure (clamp tonnage) against the skins 74 and 76. At the same time, the impermeable chamber formed by barrier 68 is pressurized with a counter pressure as represented by arrows 80. The outward counter pressure is generally less than the inward molding pressure or clamp tonnage. The overall molding process is carried out at relatively low pressure. The pressures used are similar to the levels used in vacuum bagged autoclave parts. Generally, it is desirable to use as much internal pressure as possible without creating bag bursts or leaks. Shop air that typically available at from 80 to 150 psi is suitable. However, greater pressures may be used such as nitrogen or helium from high-pressure tanks. The clamp tonnage must be greater than the internal pressure. The need for clamp tonnage or other externally applied pressure can be eliminated by using a very strong and stiff heavy mold that could be bolted together around the periphery of the assembly. However, this is a relatively slow process and there is a risk of clamp failure and possible explosion. Accordingly, the use of presses of the type conventionally employed in making sandwich panels is preferred. The thickness of the sandwich assemblies is selected so that contact between the skin as and core will occur during the application of clamping tonnage without crushing or otherwise adversely affecting the panel. Typically, the external pressure actually applied by the press against the skins is between 15 to 150 psi.

The assembly is also heated during the molding process to partially melt the plastic core, plastic barrier and/or plastic skins to thermally fuse the core, barrier and skins together. This forms a sandwich panel having strong bonds between the three elements. In the embodiment shown in FIG. 3, the plastic materials for the core, barrier and skins should be chosen so that they can be thermally bonded together. If the plastics chosen for these three elements are not compatible for thermal bonding, such as polyamide and polypropylene, then a suitable adhesive must be included between the non-compatible elements. The plastic materials may include fibers embedded in the plastic. It is preferred that the outer skin melts and becomes fused to the barrier while the core melts and becomes fused to the other side of the barrier. In this preferred embodiment, the barrier has the highest melt temperature of the three components.

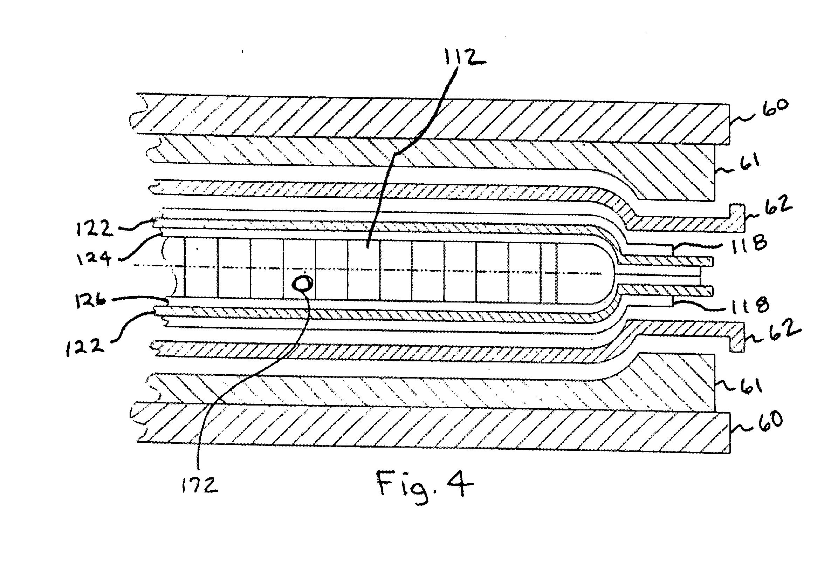

A partial view of an alternate assembly of core, barrier and skins is shown in place within press 60 in FIG.4. The assembly shown in FIG. 4 corresponds to final molded panels of the type shown in FIG. 1. The assembly includes a thermoset self-adhesive composite skin 118, barrier 122, and adhesive layers 124 and 126. The perforated honeycomb is shown at 112. The inlet for introducing the pressurizing gas or liquid into the core is shown at 172.

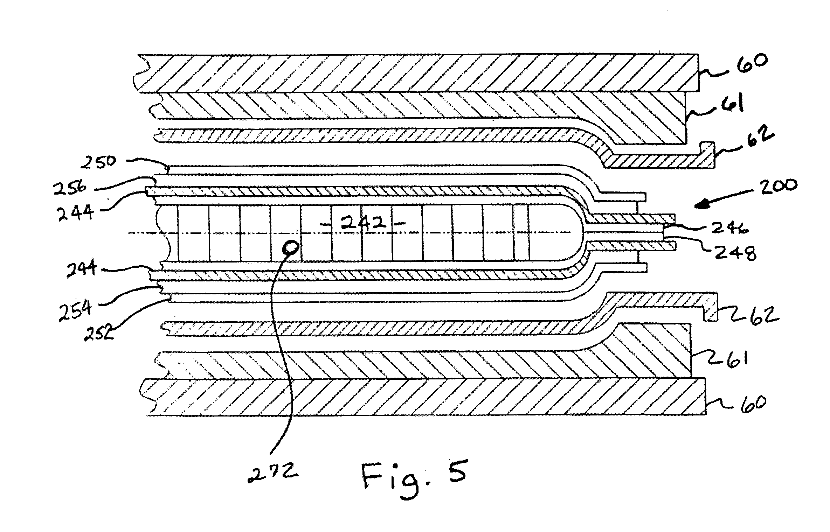

Another example is shown generally at 200 in FIG. 5. As in FIGS. 3 and 4, the assembly 200 is shown in place within press 60, backup tool 61 and shell tool 62. In this particular embodiment, the assembly 200 includes thermoplastic composite skins 250 and 252 that are bonded to barrier 244 using adhesive layers 254 and 256. The barrier 244 is in turn bonded to the perforated core 242 by way of adhesive layers 246 and 248. The inlet for introducing the pressurizing gas or liquid into the core is shown at 272. Assemblies of the type shown in FIG. 5 correspond to finished sandwich panels of the type shown in FIG. 2 wherein the skins, barrier and core are all bonded together using adhesives.

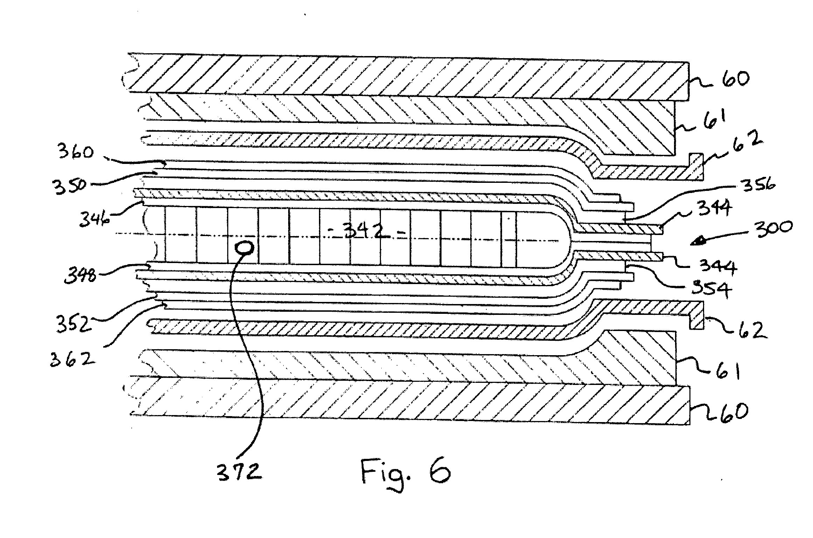

An additional exemplary embodiment is shown generally at 300 in FIG. 6. The assembly 300 includes a perforated honeycomb core 342 that is bonded to barrier 344 by way of adhesive layers 346 and 348. The barrier 344 is in turn bonded to the composite skin 350 and 352 by way of adhesive layers 354 and 356. Outer surface layers 360 and 362 are bonded to the composite layers 350 and 352, respectively. The outer material layers 360 and 362 can be any of the well-known finishing materials commonly used to provide a surface finish for sandwich panels. These include surfacing films to provide a smooth surface finish, as well as carpeting, decorative sheets or any other material that provides the desired surface finish to the panel. The inlet for introducing the pressurizing gas or liquid into the core is shown at 372.

Examples of practice are as follows:

### EXAMPLE 1

### (All thermosetting materials where extra adhesives are used - Figs. 1 and 4)

A sandwich panel in accordance with the present invention was prepared using aluminum honeycomb as the core material. The honeycomb was perforated for internal ventilation and had a cell size of 1/2 inch. The core was 11.5 inches long, 11.5 inches wide and 1.00 inch thick. The honeycomb was placed between two sheets of CAPRAN 526 Nylon 6/6 film that was 0.003 inch thick. This particular Nylon film is available from Honeywell Corp. (Buffalo, New York). Each of the Nylon films was 15 inches wide and 15 inches long so that they overlapped the edges of the honeycomb. The resulting flashing of Nylon film surrounding the honeycomb was compression sealed by the clamp tonnage, to provide a chamber or bag surrounding the honeycomb. Prior to "bagging", an epoxy adhesive was applied to the interior surface of the Nylon film. The epoxy adhesive was a 250°F supported film adhesive such as Redux 382H or Redux 609 available from Hexcel Corp. (Dublin, Ca.). The adhesive was applied at a rate of 0.045 pounds per square foot of Nylon film surface area. The epoxy adhesive formed an adhesive layer that was used to bond the Nylon barrier film to the honeycomb and to bond the overlapping portions of the films together.

Graphite composite prepreg skins were applied to the Nylon barrier film on both sides of the honeycomb. The graphite composite included 1 layers of woven graphite cloth, which were impregnated with an epoxy resin. The resin was present in an amount of 45% by weight of the prepreg. The graphite/epoxy prepreg skins were each 14 inches wide and 14 inches long so that they also overlapped the edges of the honeycomb.

The assembly of honeycomb, Nylon bag and prepreg skins were placed in a graphite shell tool or mold (with 12" x 12" x 1" deep cavity) and heated to a temperature of 265°F for 60 minutes. The external molding pressure applied to the graphite mold was 55 tons. The honeycomb was internally pressurized to 70 psig during the molding process. After the required cure time, the press was cooled, the part demolded and trimmed to remove flash.

### EXAMPLE 2

### (Mismatch thermoplastic/thermosetting materials, some adhesive necessary-Figs. 1 and 4)

A sandwich panel in accordance with the present invention was prepared using HEXWEB prime cure aramid honeycomb as the core material. The honeycomb was not perforated for internal ventilation, as it is somewhat porous and had a cell size of 3/16 inch. The core was 11.5 inches long, 11.5 inches wide and 1.00" inch thick. The honeycomb was placed between two sheets of CAPRAN 980 Nylon 6 Film 0.003 inches thick, available from Honeywell Corp, that acts as an adhesive. CAPRAN 526 Nylon 6/6 film that was 0.003 inch thick by 15 inches wide and 15 inches long overlapping the edges of the honeycomb and adhesive films forms the barrier. The resulting flashing of Nylon film surrounding the honeycomb is sealed by the clamp tonnage, to provide a chamber or bag surrounding the honeycomb.

TOWFLEX TFFEG 682 2x2 N6:30% Nylon 6/E Glass prepreg skins (available from Hexcel Corp.) were applied to the Nylon barrier film on both sides of the honeycomb. The skins were 1 layer of woven nylon 6/E glass yams forming a thermoplastic prepreg fabric. The Nylon 6 resin was present in an amount of 30% of the weight of the prepreg. The nylon 6/ E glass prepreg skins were each 14 inches wide and 14 inches long so that they also overlapped the edges of the honeycomb.

The assembly of honeycomb, nylon adhesive film, nylon barrier and prepreg skins were placed in a graphite shell tool or mold (with 12" x 12" x 1" deep cavity) and heated to a temperature of 465°F for 6 minutes. The external molding force applied to the graphite mold was 45 tons. The honeycomb was internally pressurized to 25 psig during the molding process. After this 6 minute heat up process, the shell tool/part assembly was transferred to a cold(er) press at 250°F and held under clamp force of 20,000 lbs while internally 35 psi air pressure was applied for 3 minutes. Thereafter the panel was de-molded and the flash trimmed off.

### EXAMPLE 3

### (All mismatched thermoplastics where adhesives are necessary and surfacing film - Fig. 6)

A sandwich panel in accordance with the present invention was prepared using HEXWEB EM polyester/nylon honeycomb as the core material. The honeycomb is porous and had a cell size of 3/8 inch. The core was 11.5 inches long, 11.5 inches wide and 1.00" inch thick. The honeycomb was placed between two sheets of 0.002 inches thick Polyolefin Film that acts as an adhesive (available from Bemis, Shirley, MA). CAPRAN 526 Nylon 6/6 film that was 0.003 inch thick by 15 inches wide and 15 inches long overlapping the edges of the honeycomb and adhesive films forms the barrier. The resulting flashing of Nylon film surrounding the honeycomb is sealed by the clamp tonnage, to provide a chamber or bag surrounding the honeycomb. Again two layers of Polyolefin film acting as adhesive are placed on either side of the assembly. These adhesive layers may be necessary when the various polymeric components are of dissimilar chemistry and don't ordinarily adhere to each other.

TOWFLEX Polypropylene/E Glass prepreg skins, TFF EG 744 2x2 PP:30% (available from Hexcel Corp.) were applied to the adhesive film on both sides of the films and honeycomb. The skins were 1 layer of woven PP/E glass yams forming a thermoplastic prepreg fabric. The PP resin was present in an amount of 30% of the weight of the prepreg. The PP/ E glass prepreg skins were each 14 inches wide and 14 inches long so that they also overlapped the edges of the honeycomb. A black polypropylene surfacing film, TFCA1 0.010 inch thick (available from Toray Plastics America, North Kingstown, R.I.) was applied on the outside surfaces of the prepreg.

The assembly of honeycomb, Polyolefin adhesive film, Nylon barrier, Polyolefin adhesive film and PP/E-glass prepreg skins, and PP surfacing films were placed in a graphite shell tool or mold (with 12" x 12" x 1" deep cavity) and heated to a temperature of 400°F for 6 minutes. The external molding pressure applied to the graphite mold was 55 tons. The honeycomb was internally pressurized to 10 psig during the molding process. After this 7 minute heat up process, the shell tool/part assembly was transferred to a cold(er) press at 150°F and held under clamp force of 20,000 lb while internally 30 psi air pressure was applied for 3 minutes. Thereafter the panel was demolded and the flash trimmed off.

### EXAMPLE 4

### (All compatible thermoplastics where no adhesive necessary, easily recyclable)

A sandwich panel in accordance with the present invention is prepared using HEXWEB EM nylon honeycomb as the core material. This sandwich panel is similar to the type of sandwich panel shown in FIG. 3, except that a honeycomb core is used in place of the egg crate core 64. The honeycomb is porous and has a cell size of *3*/*8* inch. The core is 11.5 inches long, 11.5 inches wide and 1.00" inch thick. CAPRAN 526 Nylon 6/6 film that is 0.003 inch thick by 15 inches wide and 15 inches long overlapping the edges of the honeycomb forms the barrier. The resulting flashing of Nylon film surrounding the honeycomb is sealed by the clamp tonnage, to provide a chamber or bag surrounding the honeycomb.

TOWFLEX N6/E Glass prepreg skins are applied to the Nylon barrier film on both sides of the honeycomb. The skins are 1 layer of woven N6/E glass yams forming a thermoplastic prepreg fabric. The N6 resin is present in an amount of 34% of the weight of the prepreg. The N6/ E glass prepreg skins are each 14 inches wide and 14 inches long so that they also overlap the edges of the honeycomb.

The assembly of honeycomb, Nylon barrier, and N6/E-glass prepreg skins are placed in a graphite shell tool or mold (with 12" x 12" x 1" deep cavity) and heated to a temperature of 465°F for 6 minutes. The external molding pressure applied to the graphite mold is 55 tons. The honeycomb is internally pressurized to 25 psig during the molding process. After this 6 minute heat up process, the shell tool/part assembly is transferred to a cold(er) press at 250°F and held under clamp force of 20,000 lb while internally 35 psi air pressure is applied for 3 minutes. Thereafter the panel is de-molded and the flash trimmed off.

### EXAMPLE 5

### (Fig. 5)

A sandwich panel in accordance with the present invention was prepared using HEXWEB EM polyester/nylon honeycomb as the core material. The honeycomb is porous and had a cell size of 3/8 inch. The core was 11.5 inches long, 11.5 inches wide and 1.04" inch thick. The honeycomb was placed between two sheets of 0.002 inches thick Polyolefin Film that acts as an adhesive, available from Bemis. CAPRAN 526 Nylon 6/6 film that was 0.003 inch thick by 15 inches wide and 15 inches long overlapping the edges of the honeycomb and adhesive films forms the barrier. The resulting flashing of Nylon film surrounding the honeycomb is sealed by the clamp tonnage, to provide a chamber or bag surrounding the honeycomb. Again two layers of Polyolefin film acting as adhesive are placed on either side of the assembly. These adhesive layers may be necessary when the various polymeric components are of dissimilar chemistry and don't ordinarily adhere to each other.

TWINTEX Polypropylene/E Glass prepreg skins (available from Vetrotex Saint-Gobain, Maumee, OH) were applied to the adhesive film on both sides of the films and honeycomb. The skins were 1 layer of woven PP/E glass yarns forming a thermoplastic prepreg fabric. The PP resin was present in an amount of 40% of the weight of the prepreg. The PP/ E glass prepreg skins were each 14 inches wide and 14 inches long so that they also overlapped the edges of the honeycomb.

The assembly of honeycomb, Polyolefin adhesive film, Nylon barrier, Polyolefin adhesive film and PP/E-glass prepreg skins were placed in a graphite shell tool or mold (with 12" x 12" x 1" deep cavity) and heated to a temperature of 400°F for 6 minutes. The external molding pressure applied to the graphite mold was 55 tons. The honeycomb was internally pressurized to 10 psig during the molding process. After this 7 minute heat up process, the shell tool/part assembly was transferred to a cold(er) press at 150°F and held under clamp force of 20,000 lbs while internally 30 psi air pressure was applied for 4 minutes. Thereafter the panel was de-molded and the flash trimmed off.

### EXAMPLE 6

### (All compatible thermoplastics where no adhesive is necessary plus egg crate core that is easily recyclable - Fig. 3)

A sandwich panel in accordance with the present invention is made using nylon 6 egg crate shaped material as the core. The egg crate need not be porous as both sides are exposed to the same internal pressure while processing. The core is 11.5 inches long, 11.5 inches wide and 1.00 inch thick. CAPRAN 526 Nylon 6/6 film that is 0.003 inch thick by 15 inches wide and 15 inches long and is used to form the barrier. The resulting flashing of Nylon film surrounding the core is sealed by the clamp tonnage, to provide a chamber or bag surrounding the core.

TOWFLEX N6/E Glass prepreg skins are applied to the Nylon barrier film on both sides of the core. The skins are 1 layer of woven N6/E glass yams forming a thermoplastic prepreg fabric. The N6 resin is present in an amount of 34% of the weight of the prepreg. The N6/ E glass prepreg skins are each 14 inches wide and 14 inches long so that they also overlap the edges of the core.

The assembly of core, Nylon barrier, and N6/E-glass prepreg skins are placed in a graphite shell tool or mold (with 12" x 12" x 1" deep cavity) and heated to a temperature of 465°F for 6 minutes. The external molding pressure applied to the graphite mold was is around 50 tons. The core is internally pressurized to 25 psig during the molding process. After this 6 minute heat up process, the shell tool/part assembly is transferred to a cold(er) press at 250°F and held under clamp force of 10,000 lbs while internally 35 psi air pressure is applied for 3 minutes. Thereafter the panel is demolded and the flash trimmed off.

Having thus described exemplary embodiments of the present invention, it should be noted by those skilled in the art that the within disclosures are exemplary only and that various other alternatives, adaptations and modifications may be made within the scope of the present invention. Accordingly, the present invention is not limited to the above preferred embodiments and examples, but is only limited by the following claims.

## Claims

1. A sandwich panel comprising:
a core comprising a permeable body having a first panel surface with a first perimeter, a second panel surface with a second perimeter and an edge extending between the first and second perimeters of said first and second panel surfaces;
a first skin attached to said first panel surface, said first skin substantially covering said first panel surface;
a second skin attached to said second panel surface, said second skin substantially covering said second panel surface; and
a barrier located between said first skin and said first panel surface and between said second skin and said second panel surface, said barrier being made from an impermeable material and extending around said core to provide an impermeable chamber in which said core is located.

2. A sandwich panel according to claim 1, wherein said core is honeycomb.

3. A sandwich panel according to claim 2, wherein said honeycomb comprises impermeable walls that have been perforated to provide said permeable body.

4. A sandwich panel according to claim 1, wherein said barrier comprises a thermoplastic material.

5. A sandwich panel according to claim 1, wherein said barrier is bonded to the first and second panel surfaces of said vapor permeable body with an adhesive.

6. A sandwich panel according to claim 1 or claim 5, wherein said barrier is bonded to said first and/or second skin with an adhesive.

7. A sandwich panel according to claim 1, wherein said first and second skins extend out past the edge of said impermeable body.

8. A method for making a sandwich panel comprising the steps of:
providing a core comprising a permeable body having a first panel surface with a first perimeter, a second panel surface with a second perimeter and an edge extending between the first and second perimeters of said first and second panel surfaces;
surrounding said core with an impermeable material to form an impermeable chamber having an interior in which said core is located;
placing at least one skin next to said first or second panel surface so that said impermeable material is sandwiched between said skin and said panel surface, said skin having an interior surface adjacent to said impermeable material and an exterior surface;
bonding said skin to said core by applying a given amount of molding pressure and heat to the exterior surface of said skin; and
applying pressure to the interior of said impermeable chamber during said bonding step to form a counter pressurized chamber that applies counter pressure against the interior surface of said skin.

9. A method for making a sandwich panel according to claim 8, which comprises the steps of placing a first skin next to said first panel surface and placing a second panel skin next to said second panel surface wherein said first and second skins sandwich said impermeable material between said first and second panel surfaces.

10. A method for making a sandwich panel according to claim 8, wherein an adhesive is placed between said impermeable material and said permeable body to provide bonding of said impermeable material to said permeable body.

11. A method for making a sandwich panel according to claim 8 or claim 10, wherein an adhesive is placed between said skin and said impermeable material to provide bonding of said impermeable material to said skin.

12. A method for making a sandwich panel according to claim 8, wherein said core is honeycomb.

13. A method for making a sandwich panel according to claim 12, wherein said honeycomb comprises impermeable walls that have been perforated to provide said permeable body.

14. A method for making a sandwich panel according to claim 8, wherein said barrier comprises a thermoplastic material.

15. A method for making a sandwich panel according to claim 8, wherein said molding pressure is applied to said skin by a mold.

16. A method for making a sandwich panel according to claim 8, wherein said skin extends out past the edge of said permeable body and wherein said molding pressure and counter pressure are applied to the portion of said skin that extends out past the edge of said permeable body.

17. In a method for making a sandwich panel wherein a core is sandwiched between two skins by applying a molding pressure to the exterior surface of the skins, **characterized in that** the method comprises making said core permeable, if it is not already permeable, and surrounding said core with an impermeable material to form an impermeable chamber in which said core is located and pressurizing said chamber during application of said molding pressure to provide a counter pressure against the interior surface of the skins.

18. An improved method for making a sandwich panel according to claim 17, wherein an adhesive is placed between said impermeable material and said core to provide bonding of said impermeable material to said core.

19. An improved method for making a sandwich panel according to claim 17 or claim 18, wherein an adhesive is placed between said skins and said impermeable material to provide bonding of said impermeable material to said skins.

20. An improved method for making a sandwich panel according to claim 17, wherein said core is honeycomb.

21. An improved method for making a sandwich panel according to claim 20, wherein said honeycomb comprises impermeable walls that have been perforated to provide a permeable core.

22. An improved method for making a sandwich panel according to claim 17, wherein said impermeable material is thermoplastic.

23. An improved method for making a sandwich panel according to claim 17, wherein said molding pressure is applied to said skins by a press.

24. An improved method for making a sandwich panel according to claim 17, wherein said skins extend out past the edge of said permeable body and wherein said molding pressure and counter pressure are applied to the portion of said skins that extend out past the edge of said permeable body.
